# EUROPEAN PATENT SPECIFICATION

(11) **EP 3 531 533 B1**
(45) Date of publication and mention of the grant of the patent: **21.04.2021**
(21) Application number: 19158237.8
(22) Date of filing: 20.02.2019
(51) Int. Cl.: H02J 50/12, H02J 50/70

(54) **SYSTEM AND METHOD FOR RESONANT WIRELESS POWER TRANSMISSION**
SYSTEM UND VERFAHREN ZUR RESONANTEN DRAHTLOSEN LEISTUNGSÜBERTRAGUNG
SYSTÈME ET PROCÉDÉ DE TRANSMISSION DE PUISSANCE SANS FIL À RÉSONANCE

(30) Priority: 23.02.2018 IT 201800002986
(43) Date of publication of application: 28.08.2019
(73) Proprietor: Powersoft SpA, 50018 Scandicci (Firenze) (IT)
(72) Inventor: LASTRUCCI, Claudio, 50018 SCANDICCI (FIRENZE) (IT)
(74) Representative: Conti, Marco

(56) References cited:
- WO-A1-2004/105208
- WO-A1-2006/118475
- US-A1- 2009 134 712
- JAMES J ET AL: "A variable inductor based tuning method for ICPT pickups", POWER ENGINEERING CONFERENCE, 2005. IPEC 2005. THE 7TH INTERNATIONAL SINGAPORE 29-02 NOV. 2005, PISCATAWAY, NJ, USA,IEEE, PISCATAWAY, NJ, USA, 29 November 2005 (2005-11-29), page 1142, XP031330795, ISBN: 978-981-05-5702-7

## Description

This invention relates to a system for transmitting electrical power.

During everyday life use is made of electronic appliances of many types and for a wide range of purposes. Personal computers, videogame consoles, televisions, lamps, household appliances and the like are only some of the apparatuses used every day. In general, reference will be made to these apparatuses with the term "users".

A first problem arises from the need to have several users connected to a domestic mains supply whilst at the same time having a low number of sockets in a room where the above-mentioned apparatuses are to be connected.

Another problem arises from the power cables of the above-mentioned users which, even if grouped together in single blocks, can cause different overall dimensions. For example, a user might trip over the above-mentioned cables or, if one of the above mentioned apparatuses is to be moved, the cables may become twisted with each other, resulting in a loss of time for the user.

Systems and apparatuses are also known for the wireless transmission of energy (e.g. from patent document WO2004/105208A1), but, disadvantageously, they are not able to transmit sufficient levels of energy. For example, the distance between the transmitter and receiver apparatuses is a first cause for a non-optimum energy transmission.

More specifically, these systems/apparatuses use variable capacitors in order to guarantee a certain level of energy transmitted but they are not, however, able to reach satisfactory performance levels for the purpose of correct operation of the users powered by the system/apparatus.

Even more specifically, as a result of the variations in constructional tolerances or the introduction of metal objects inside the system/apparatus the tuning in the transmission of the energy may not be optimum and the variable capacitors are not sufficiently suitable to compensate for these variations, therefore resulting in phase displacement of the system/apparatus.

The technical purpose of the invention is therefore to provide a system for transmitting electrical power and a process for transmitting electrical power which are able to overcome the drawbacks of the prior art.

More specifically, an aim of the invention is to provide a system for transmitting electrical power and a process for transmitting electrical power which allow the use of a large number of users even in the presence of a low number of electrical sockets.

A further aim of the invention is to provide a system for transmitting electrical power and a process for transmitting electrical power which allow a more efficient transmission of the energy relative to the prior art systems and apparatuses.

The technical purpose indicated and the aims specified are achieved by a system for transmitting electrical power and a process for transmitting electrical power according to the appended independent claims 1 and 13. The dependent claims correspond to possible embodiments of the invention.

Further features and advantages of the invention are described in more detail below, with reference to a preferred, non-limiting embodiment of a system for transmitting electrical power and an apparatus for transmitting electrical power with reference to the accompanying drawing, in which:
- Figure 1 is a schematic view of a system for transmitting electrical power according to the invention;
- Figure 2 is a schematic view of a component of the transmission system of Figure 1 according to a first embodiment;
- Figure 3 is a schematic view of the component of Figure 2 according to a second embodiment;
- Figure 4 is a schematic view of a further component of the system for transmitting electrical power according to a relative alternative embodiment.

With reference to the accompanying drawings, the numeral 1 denotes in its entirety a system for transmitting electrical power which, for simplicity of description, will hereafter be referred to as system 1.

The system 1 comprises a high-frequency current generator 2 operating at a fixed frequency.

The current generator 2 is connectable to a domestic mains supply in such a way as to generate a current to be introduced into the system 1. Preferably, the current generator 2 operates at a fixed frequency which may be selected between a range of between 25 hertz and 5 megahertz. The choice of frequency at which the current generator 2 operates is predetermined on the basis of the users to be powered with the system 1 or the domestic mains supply to which the current generator 2 is connected.

More specifically, the current generator 2 is a sinusoidal alternating current generator.

The system 1 also comprises a non-resonant transmission circuit 3. The choice of a non-resonant circuit is preferable to other solutions since it facilitates the installation of the system 1 inside the room. More specifically, a non-resonant circuit does not require tuning adjustments during installation.

More specifically, the transmission circuit 3 is connected with the current generator 2 by means of a closed path and is configured to generate a magnetic field. In other words, the current input and output of the transmission circuit 3 coincide with the current generator 2.

More specifically, the transmission circuit 3 is passed through by the current generated by the current generator 2 generating the above-mentioned magnetic field. More specifically, the magnetic field is generated inside and outside the perimeter delimited by the closed path of the transmission circuit 3.

The fixed frequency of the current generator 2 coincides with a non-resonant frequency of the transmission circuit 3.

As mentioned above, the choice of the fixed frequency depends on the characteristics of the domestic mains supply and/or the receivers to be powered and/or the transmission circuit 3. Preferably, the choice of the fixed frequency depends on standards which limit the intensity of the magnetic field in relation to the human body.

The system 1 also comprises at least one resonant type receiver circuit 4. The receiver circuit 4 is connected to a user and can be positioned in an area close to the transmission circuit 3 in such a way that a current is induced to be sent to the user.

In other words, the receiver circuit 4 is located inside or outside the perimeter of the transmission circuit 3 in such a way as to be struck by the magnetic field for inducing the current.

The term "user" is used to mean any type of electrical or electronic device or device which, in any case, requires an electricity supply for it to be powered and therefore perform its function.

These users can be, for example, lamps, electric household appliances or personal computers, multimedia devices or devices for audio reproduction. In general, the term "user" is used to mean any apparatus which would require connection to the domestic mains supply or which would require batteries in order to operate.

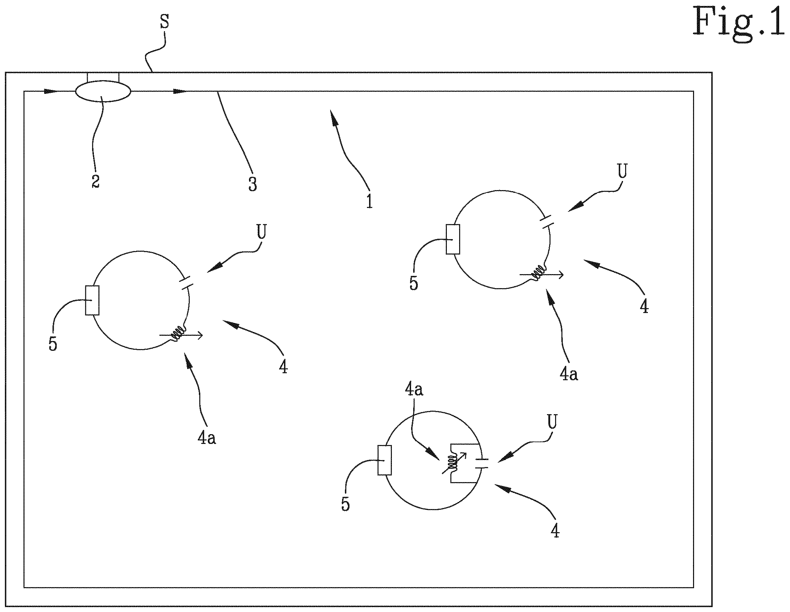

Figure 1 shows a system in which there are three users 'U' with the respective receiver circuits 4.

Each receiver circuit 4 is designed to maintain a tuning between the fixed frequency of the current generator 2 and a resonance frequency of the circuit receiver 4. More specifically, the tuning must be maintained in order to maximise the transmission of energy between the transmission circuit 3 and the receiver circuit 4.

Preferably, the receiver circuit 4 is configured to generate a control current in such a way as to keep fixed the tuning between the fixed frequency of the current generator 2 and the resonance frequency of the receiver circuit 4.

The circuit receiver 4 preferably comprises an energy storage system 5 which makes it possible to use the user even when the system 1 is not in operation for any reason. For example, the energy storage system 5 may be made in the form of an energy storage battery.

The energy storage system 5 may be recharged by inducing current obtained with the transmission circuit 3. In other words, the transmission circuit 3 makes it possible to transmit power to the users and to recharge the energy storage system 5.

Preferably, the energy storage batteries make it possible to generate the control current which makes it possible to maintain the receiver circuit 4 (more specifically, its resonance frequency) in tune with the transmission circuit 3 (that is, at the fixed frequency of the current generator 2).

The receiver circuit 4 might not have an energy storage system 5 but receive the control current directly from the system 1. In this way, if the system 1 is switched off, the receiver circuit 4 would not operate but the presence of single storage systems onboard the user 'U' is avoided.

Preferably, the receiver circuit 4 (or the receiver circuits 4 as shown in the accompanying drawings) comprises a variable linear inductor 4a for tuning the receiver circuit 4 (resonant) to the non-resonant fixed frequency of the current generator 2.

In other words, as per the design of the system, the frequencies of the receiver circuits 4 are tuned with the fixed frequency of the current generator 2.

Following possible interferences or variations in construction tolerances it is necessary that the tuning is maintained in order to prevent a deviation between the frequencies (also called mistuning) and, therefore, a non-optimum energy transmission.

The control current thus makes it possible to vary the inductance of the receiver circuit 4 (more specifically, the inductance of the variable linear inductor 4a with which the receiver circuit 4 is made) in such a way as to compensate for the variation or interference which would result in a mistuning between the frequencies.

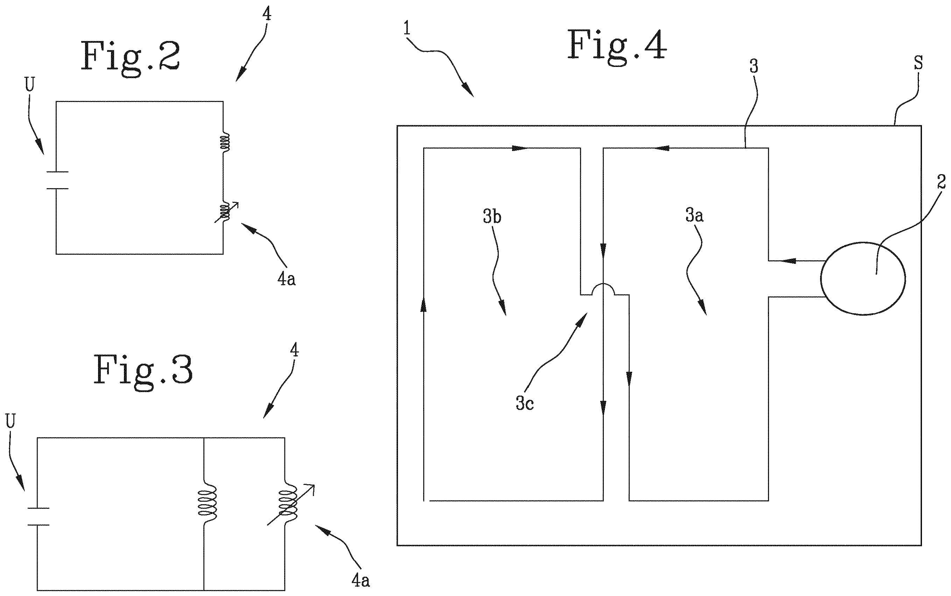

As shown in Figure 2, the variable linear inductor 4a can be made as an inductance in series to the user 'U' (that is, to the inductance of the circuit of the user 'U'). In this way, the variable linear inductor 4a generates a control inductance which corresponds to an inductance delta subtracted from the inductance of the user 'U'.

As shown in Figure 3, the variable linear inductor can be made as an inductance in parallel to the user 'U' (that is, to the inductance of the circuit of the user 'U'). In this way, the variable inductor 4a generates a control inductance which corresponds to an inductance delta which is added to the inductance of the user 'U'.

Figure 1 shows two users 'U' in which the variable linear inductor 4a is made as an inductor in series and a user 'U' in which the variable linear inductor 4a is in parallel.

The system 1 is able to detect the mistuning using suitable algorithms implemented in the receiver circuit 4 which therefore activate the receiver circuit 4 so that it intervenes to return the required tuning between the frequencies so as to maximise energy transfer.

Merely by way of example, and therefore non-limiting, an algorithm for identifying the maximum transfer point may be the MPPT (*Maximum Power Point Tracker*) algorithm.

The system 1 described above and in particular the transmission circuit 3 is connected, for example, at a perimeter of a room 'S' in such a way as to generate the magnetic field so as to induce a current in the at least one receiver circuit 4 when located in the proximity of the perimeter.

In other words, the current generator 2 is connected to the domestic mains supply by means of a power socket and the transmission circuit 3 is installed on the walls or portions of walls or on the floor of the room in such a way as to form the closed path with which it is connected to the current generator 2. The transmission circuit 3 may be installed inside or outside the walls of the room 'S', provided the installation allows the transmission of the electricity to the users 'U'.

In this way, when the receiver circuit 4 installed on the user 'U' is located inside the room 'S' (that is, close to the transmission circuit 3) the current is induced in the receiver circuit 4 thus activating the user 'U'.

Preferably, the at least one receiver circuit 4 (that is, the user 'U') is equipped with a power switch configured to induce, or not, the current when the receiver circuit 4 is positioned inside the perimeter of the room 'S'. In other words, if it is not necessary for the user 'U' to be activated although positioned in the room, the circuit receiver 4 may be switched off by the above-mentioned switch, allowing a further control on the user 'U'. Preferably, the transmission circuit 3 is equipped with a respective switch configured to generate, or not, the magnetic field on the basis of the requirements of a user who enters the room.

Preferably, the at least one receiver circuit 4 is provided with an energy storage battery 5, as described above, which can be operated by means of the above-mentioned ON switch in such a way that user can be switched on even when the transmission circuit 3 is switched off.

In other words, a user is able to charge the energy storage battery 5 by switching on the transmission circuit 3 and, once the transmission circuit 3 is switched off, switching on the circuit receiver 4 of the user 'U' when necessary without necessarily using the transmission circuit 3.

Figure 4 shows an alternative embodiment of the transmission circuit 3 described above.

Preferably, therefore not necessarily, the alternative embodiment could be installed in the floor or ceiling of the room 'S'.

More specifically, the transmission circuit 3 is divided into a first portion 3a and a second portion 3b formed by a single circuit wherein the transmission circuit 3 is bent on itself forming a point of substantial superposing 3c.

At this superposing point 3c (as well as along the entire portion in which the transmission circuit 3 is parallel to itself), preferably central to the room 'S', there is a double intensity of the magnetic field.

In this way, with the same power of the system 1 described above, there is an increase in the transmission of electricity four times greater than the previous case.

The invention further relates to a process for transmitting electrical power. The process comprises preparing a system 1 such as that described above. More specifically, the process comprises preparing the transmission circuit 3 of the system 1 close to a perimeter of a room 'S' (for example, in the walls or in the floor of the room 'S') as shown in the accompanying drawings. In this way, the transmission circuit 3 defines a transmission space in the vicinity of the transmission circuit 3.

The process comprises connecting the high-frequency current generator 2 the domestic mains supply or to any electricity supply source. Connecting the current generator 2 to the domestic mains supply (or another source of energy supply) allows a current to pass through the transmission circuit 3 in such a way as to generate a magnetic field in the proximity of the transmission space. In other words, following the connection of the current generator 2 (non-resonant operating at a fixed frequency) to the domestic mains supply, the magnetic field is generated in the transmission space. At this point, a receiver circuit 4 (connected to a user 'U') is immersed in the inside area in such a way that it is struck by the magnetic field in such a way as to generate an induced current in the receiver circuit 4.

The current induced thus makes it possible to power the user 'U' connected to the receiver circuit 4.

The system 1 and the process described above overcome the drawbacks of the prior art.

More specifically, the system 1 and the process described above allow the transfer of energy with a greater efficiency relative to the prior art systems and apparatuses.

Advantageously, the system 1 and the process described above allow a use of a greater number of users whilst maintaining the tuning between the transmission circuit 3 and the at least one receiver circuit 4.

Advantageously, the system 1 and the process described above are able to better compensate for variations of constructional tolerances or the introduction of interference with respect to the prior art systems and apparatuses.

## Claims

1. A system (1) for transmitting electrical power comprising:
- a sinusoidal alternating current generator (2) configured to be connected to a power supply source and operate at non-resonant fixed frequency;
- a transmission circuit (3), of the non-resonant type, connected with the current generator (2) using a closed path and configured to generate a magnetic field;
wherein the system comprises a plurality of receiver circuits (4), of the resonant type, which are configured to be connected to a respective user (U) and be positioned in a space close to the transmission circuit to be immersed in the magnetic field generated by the transmission circuit (3) in such a way as to generate an induced current for powering the user (U), each receiver circuit (4) of said plurality being configured to maintain a tuning between the fixed frequency of the current generator (2) and a resonance frequency of the circuit receiver (4),
**characterised in that** each receiver circuit (4) of said plurality comprises a variable linear inductor (4a) configured for tuning the resonance frequency of the receiver circuit (4) to the non-resonant fixed frequency of the current generator (2), and
**in that** each receiver circuit (4) of said plurality is equipped with a power switch, configured to induce the current when the receiver circuit (4) is positioned inside the perimeter delimited by the closed path of the transmission circuit (3).

2. The system (1) for transmitting electrical power according to claim 1 , wherein each of the receiver circuits (4) of said plurality is equipped with an energy storage system (5).

3. The system (1) for transmitting electrical power according to claim 2, wherein the energy storage system (5) is rechergeable by the induced current generated by the transmission circuit (3).

4. The system (1) for transmitting electrical power according to claim 2 or 3, wherein the energy storage system (5) includes an energy storage battery configured to generate the control current to mantain the receiver circuit (4) tuned with the transmission circuit (3).

5. The system (1) for transmitting electrical power according to any one of the preceding claims, wherein the variable linear inductor (4a) is connected in parallel to the user (U).

6. The system (1) for transmitting electrical power according to any one of the claims from 1 to 4, wherein the variable linear inductor (4a) is connected in series to the user (U).

7. The system (1) for transmitting electrical power according to any one of the preceding claims, wherein the each of the receiver circuit (4) of said plurality is configured for generating a control current in such a way as to maintain a tuning between fixed frequency and the frequency of the receiver circuit (4).

8. The system (1) for transmitting electrical power according to any one of the preceding claims, wherein the fixed frequency is selected from a range of between 25 Hz and 5 MHz.

9. A system (1) for transmission of electrical power according to any one of the preceding claims, wherein the transmission circuit (3) is equipped with a respective power switch configured to generate, or not, the magnetic field.

10. The system (1) for transmitting electrical power according to any one of the preceding claims, wherein each receiver circuit (4) of said plurality is equipped with an energy storage system (5) which can be operated by means of the power switch for switching ON or not the user (U) when the transmission circuit (3) is switched OFF.

11. The system (1) for transmitting electrical power according to any one of the preceding claims, wherein each receiver circuit (4) of said plurality is configured to use algorithms to detect a deviation from said tuning, and to activate said receiver circuit (4) to return the required tuning between the frequencies, so as to maximise energy transfer.

12. The system (1) for transmitting electrical power according to any one of the preceding claims, wherein the transmission circuit (3) is divided into a first portion (3a) and a second portion (3b) formed by a single circuit wherein the transmission circuit (3) is bent on itself forming a point of substantial superposing (3c).

13. A process for the transmission of electrical power comprising the steps of:
- providing a system (1) according to any one of the preceding claims;
- providing a transmission circuit (3) along a perimeter of a room (S) in such a way as to define a transmission space in the vicinity of the transmission circuit (3);
- connecting a current generator (2) with high frequency and operating at fixed frequency to a domestic network;
- generating a magnetic field in the inner area through the transmission circuit (3) following the connection of the current generator (2) to the domestic network;
- immersing a plurality of receiver circuits (4) in the inner area in such a way that it is struck by the magnetic field in such a way as to generate an induced current;
- powering a user (U) connected to each receiver circuit (4) of said plurality, with the induced current.

14. The process for the transmission of electrical power according to claim 13, wherein the current generator (2) is connected to domestic mains supply by means of a power socket and the transmission circuit (3) is installed on walls or portions of walls or on the floor of the room (S), in such a way as to form the closed path with which it is connected to the current generator (2).

## Patentansprüche

1. System (1) zur Übertragung von elektrischer Leistung, umfassend:
- einen Generator (2) für sinusförmigen Wechselstrom, der konfiguriert ist, um an eine Stromversorgungsquelle angeschlossen zu werden und bei einer nicht resonanten fixen Frequenz zu arbeiten;
- einen Übertragungskreis (3) vom nicht resonanten Typ, der an den Stromgenerator (2) angeschlossen ist, nutzend einen geschlossenen Weg und konfiguriert, um ein Magnetfeld zu erzeugen,
wobei das System eine Vielzahl von Empfängerkreisen (4) vom resonanten Typ umfasst, die konfiguriert sind, um an einen jeweiligen Verbraucher (U) angeschlossen zu werden und in einem Bereich in der Nähe des Übertragungskreises positioniert zu werden, um in das vom Übertragungskreis (3) erzeugte Magnetfeld eingebunden zu werden, sodass ein induzierter Strom für die Speisung des Verbrauchers (U) generiert wird, wobei ein jeder Empfängerkreis (4) der genannten Vielzahl konfiguriert ist, um eine Abstimmung zwischen der fixen Frequenz des Stromgenerators (2) und einer Resonanzfrequenz des Empfängerkreises (4) aufrechtzuerhalten, **dadurch gekennzeichnet, dass** ein jeder Empfängerkreis (4) der genannten Vielzahl einen variablen linearen Induktor (4a) umfasst, der konfiguriert ist, um die Resonanzfrequenz des Empfängerkreises (4) auf die nicht resonante fixe Frequenz des Stromgenerators (2) abzustimmen, und dadurch, dass ein jeder Empfängerkreis (4) der genannten Vielzahl mit einem EIN-Schalter ausgestattet ist, der konfiguriert ist, um den Strom zu induzieren, wenn der Empfängerkreis (4) im vom geschlossenen Weg des Übertragungskreises (3) abgegrenzten Umfang positioniert ist.

2. System (1) zur Übertragung von elektrischer Leistung nach Anspruch 1, wobei ein jeder der Empfängerkreise (4) der genannten Vielzahl mit einem Energiespeichersystem (5) ausgestattet ist.

3. System (1) zur Übertragung von elektrischer Leistung nach Anspruch 2, wobei das Energiespeichersystem (5) durch den vom Übertragungskreis (3) generierten induzierten Strom aufladbar ist.

4. System (1) zur Übertragung von elektrischer Leistung nach Anspruch 2 oder 3, wobei das Energiespeichersystem (5) eine Energiespeicherbatterie einschließt, die konfiguriert ist, um den Steuerstrom zu generieren, um die Abstimmung des Empfängerkreises (4) mit dem Übertragungskreis (3) aufrechtzuerhalten.

5. System (1) zur Übertragung von elektrischer Leistung nach einem der vorhergehenden Ansprüche, wobei der variable lineare Induktor (4a) mit einer Parallelschaltung an den Verbraucher (U) angeschlossen ist.

6. System (1) zur Übertragung von elektrischer Leistung nach einem der Ansprüche 1 bis 4, wobei der variable lineare Induktor (4a) mit einer Reihenschaltung an den Verbraucher (U) angeschlossen ist.

7. System (1) zur Übertragung von elektrischer Leistung nach einem der vorhergehenden Ansprüche, wobei ein jeder Empfängerkreis (4) der genannten Vielzahl konfiguriert ist, um einen Steuerstrom zu generieren, sodass eine Abstimmung zwischen der fixen Frequenz und der Frequenz des Empfängerkreises (4) aufrechterhalten wird.

8. System (1) zur Übertragung von elektrischer Leistung nach einem der vorhergehenden Ansprüche, wobei die fixe Frequenz aus einem Bereich zwischen 25 Hz und 5 MHz ausgewählt wird.

9. System (1) zur Übertragung von elektrischer Leistung nach einem der vorhergehenden Ansprüche, wobei der Übertragungskreis (3) mit einem jeweiligen EIN-Schalter ausgestattet ist, der konfiguriert ist, um das Magnetfeld zu erzeugen oder nicht.

10. System (1) zur Übertragung von elektrischer Leistung nach einem der vorhergehenden Ansprüche, wobei ein jeder Empfängerkreis (4) der genannten Vielzahl mit einem Energiespeichersystem (5) ausgestattet ist, das mittels des EIN-Schalters betrieben werden kann, um den Verbraucher (U) auf EIN zu schalten oder nicht, wenn der Übertragungskreis (3) auf AUS geschaltet wird.

11. System (1) zur Übertragung von elektrischer Leistung nach einem der vorhergehenden Ansprüche, wobei ein jeder Empfängerkreis (4) der genannten Vielzahl konfiguriert ist, um Algorithmen zu nutzen, um eine Abweichung von der genannten Abstimmung zu erfassen und um den genannten Empfängerkreis (4) zu aktivieren, um die Abstimmung zwischen den Frequenzen zurückzubringen, sodass die Energieübertragung maximiert wird.

12. System (1) zur Übertragung von elektrischer Leistung nach einem der vorhergehenden Ansprüche, wobei der Übertragungskreis (3) in einen ersten Abschnitt (3a) und einen zweiten Abschnitt (3b) geteilt ist, geformt durch einen einzelnen Kreis, wobei der Übertragungskreis (3) um sich selbst gebogen ist, formend einen Punkt einer wesentlichen Überlagerung (3c).

13. Verfahren zur Übertragung von elektrischer Leistung, umfassend die folgenden Schritte:
- Bereitstellen eines Systems (1) nach einem der vorhergehenden Ansprüche;
- Bereitstellen eines Übertragungskreises (3) entlang eines Umfangs eines Raums (S), sodass ein Übertragungsbereich in der Nähe des Übertragungskreises (3) definiert wird;
- Anschließen eines Stromgenerators (2) mit hoher Frequenz, der bei einer fixen Frequenz arbeitet, an ein Hausnetz;
- Erzeugen eines Magnetfelds im inneren Bereich durch den Übertragungskreis (3) nach dem Anschließen des Stromgenerators (2) an das Hausnetz;
- Einbinden einer Vielzahl von Empfängerkreisen (4) in den inneren Bereich, sodass dieser vom Magnetfeld gestreift wird, sodass ein induzierter Strom generiert wird;
- Speisen eines Verbrauchers (U), der an einen jeden Empfängerkreis (4) der genannten Vielzahl angeschlossen ist, mit dem induzierten Strom.

14. Verfahren zur Übertragung von elektrischer Leistung nach Anspruch 13, wobei der Stromgenerator (2) an die Hausnetzversorgung mittels einer Steckdose angeschlossen ist und der Übertragungskreis (3) an Wänden oder Abschnitten von Wänden oder auf dem Boden des Raums (S) installiert ist, sodass der geschlossene Weg geformt wird, mit dem er an den Stromgenerator (2) angeschlossen ist.

## Revendications

1. Système (1) de transmission de puissance électrique comprenant:
- un générateur de courant (2) alternatif sinusoïdal configuré pour être connecté à une source d'alimentation de puissance et fonctionner à une fréquence fixe non résonante;
- un circuit de transmission (3), de type non résonant, connecté au générateur de courant (2) utilisant un chemin fermé et configuré pour générer un champ magnétique ; dans lequel le système comprend une pluralité de circuits récepteurs (4), du type résonnant, étant configurés pour être connectés à un utilisateur respectif (U) et pouvant être positionnés dans un espace proche du circuit de transmission pour être immergés dans le champ magnétique généré par le circuit de transmission (3) de manière à générer un courant induit pour alimenter l'utilisateur (U), chaque circuit récepteur (4) de ladite pluralité étant configuré pour maintenir une syntonisation entre la fréquence fixe du générateur de courant (2) et une fréquence de résonance du circuit récepteur (4), **caractérisé en ce que** chaque circuit récepteur (4) de ladite pluralité comprend un inducteur linéaire (4a) variable configurée pour syntoniser la fréquence de résonance du circuit récepteur (4) sur la fréquence fixe non résonante du générateur de courant (2), et **en ce que** chaque circuit récepteur (4) de ladite pluralité est équipé d'un interrupteur d'alimentation configuré pour induire le courant lorsque le circuit récepteur (4) est positionné à l'intérieur du périmètre délimité par le chemin fermé du circuit de transmission (3).

2. Système (1) de transmission de puissance électrique selon la revendication 1, dans lequel chacun des circuits récepteurs (4) de ladite pluralité est équipé d'un système de stockage (5) de puissance.

3. Système (1) de transmission de puissance électrique selon la revendication 2, dans lequel le système de stockage (5) de puissance peut être rechargé par le courant induit généré par le circuit de transmission (3) .

4. Système (1) de transmission de puissance électrique selon la revendication 2 ou 3, dans lequel le système de stockage de puissance (5) inclut une batterie de stockage de puissance configurée pour générer le courant de commande afin de maintenir le circuit récepteur (4) syntonisé avec le circuit de transmission (3).

5. Système (1) de transmission de puissance électrique selon l'une quelconque des revendications précédentes, dans lequel l'inducteur linéaire (4a) variable est connecté en parallèle à l'utilisateur (U).

6. Système (1) de transmission de puissance électrique selon l'une quelconque des revendications de 1 à 4, dans lequel l'inducteur linéaire (4a) variable est connecté en série à l'utilisateur (U).

7. Système (1) de transmission de puissance électrique selon l'une quelconque des revendications précédentes, dans lequel chacun des circuits récepteurs (4) de ladite pluralité est configuré pour générer un courant de commande de manière à maintenir une syntonisation entre une fréquence fixe et la fréquence du circuit récepteur (4) .

8. Système (1) de transmission de puissance électrique selon l'une quelconque des revendications précédentes, dans lequel la fréquence fixe est choisie dans une fourchette comprise entre 25 Hz et 5 MHz.

9. Système (1) de transmission de puissance électrique selon l'une quelconque des revendications précédentes, dans lequel le circuit de transmission (3) est équipé d'un interrupteur d'alimentation respectif configuré pour générer, ou non, le champ magnétique.

10. Système (1) de transmission de puissance électrique selon l'une quelconque des revendications précédentes, dans lequel chaque circuit récepteur (4) de ladite pluralité est équipé d'un système de stockage de puissance (5) pouvant être actionné au moyen de l'interrupteur d'alimentation pour mettre en marche ou non l'utilisateur (U) lorsque le circuit de transmission (3) est coupé.

11. Système (1) de transmission de puissance électrique selon l'une quelconque des revendications précédentes, dans lequel chaque circuit récepteur (4) de ladite pluralité est configuré pour utiliser des algorithmes pour détecter une déviation de ladite syntonisation, et pour activer ledit circuit récepteur (4) afin de retourner la syntonisation requise entre les fréquences, de manière à maximiser le transfert de puissance.

12. Système (1) de transmission de puissance électrique selon l'une quelconque des revendications précédentes, dans lequel le circuit de transmission (3) est divisé en une première partie (3a) et une seconde partie (3b) formée par un seul circuit dans lequel le circuit de transmission (3) est plié sur lui-même en formant un point de superposition (3c) substantielle.

13. Procédé de transmission de puissance électrique comprenant les étapes de:
- prévoir un système (1), selon l'une quelconque des revendications précédentes;
- prévoir un circuit de transmission (3) le long d'un périmètre d'une pièce (S) de manière à définir un espace de transmission à proximité du circuit de transmission (3) ;
- connecter un générateur de courant (2) à haute fréquence et fonctionnant à fréquence fixe à un réseau domestique;
- générer un champ magnétique dans la zone intérieure à travers le circuit de transmission (3) après le raccordement du générateur de courant (2) au réseau domestique;
- immerger une pluralité de circuits récepteurs (4) dans l'espace intérieur de manière à ce qu'elle soit frappée par le champ magnétique de manière à générer un courant induit;
- alimenter en courant induit un utilisateur (U) connecté à chaque circuit récepteur (4) de ladite pluralité.

14. Procédé de transmission de puissance électrique selon la revendication 13, dans lequel le générateur de courant (2) est connecté au réseau domestique au moyen d'une prise de courant et le circuit de transmission (3) est installé sur des murs ou des parties de murs ou sur le sol de la pièce (S), de manière à former le chemin fermé avec lequel il est connecté au générateur de courant (2).
